# EUROPÄISCHE PATENTSCHRIFT

(11) **EP 1 573 689 B1**
(45) Veröffentlichungstag und Bekanntmachung des Hinweises auf die Patenterteilung: **23.05.2018**
(21) Anmeldenummer: 03809316.7
(22) Anmeldetag: 23.10.2003
(51) Int. Cl.: G07F 7/10

(54) **VERFAHREN ZUM AUSFÜHREN EINER GESICHERTEN ELEKTRONISCHEN TRANSAKTION UNTER VERWENDUNG EINES TRAGBAREN DATENTRÄGERS**
METHOD FOR CARRYING OUT A SECURE ELECTRONIC TRANSACTION USING A PORTABLE DATA SUPPORT
PROCEDE PERMETTANT D'EXECUTER UNE TRANSACTION ELECTRONIQUE SECURISEE A L'AIDE D'UN SUPPORT DE DONNEES PORTABLE

(30) Priorität: 24.10.2002 DE 10249801
(43) Veröffentlichungstag der Anmeldung: 14.09.2005
(73) Patentinhaber: Giesecke+Devrient Mobile Security GmbH, 81677 München (DE)
(72) Erfinder: MEISTER, Gisela, 81737 München (DE); MARTIN, Nigol, 80339 München (DE)
(86) Internationale Anmeldenummer: PCT/EP2003/011761
(87) Internationale Veröffentlichungsnummer: WO 2004/038665

(56) Entgegenhaltungen:
- EP-A- 1 045 346
- WO-A-01/82190
- WO-A-02/067091
- US-A- 4 993 068
- US-A1- 2002 016 913
- US-B1- 6 263 447
- US-B1- 6 408 388

## Beschreibung

Die Erfindung geht aus von einem Verfahren nach der Gattung des Hauptanspruchs. Ein solches ist zum Beispiel aus dem "Handbuch der Chipkarten", W. Rankl, W. Effing, 3. Auflage, 1999, S. 692 bis703 unter dem Titel "Digitale Signatur" bekannt. Zur Vornahme einer rechtsverbindlichen elektronischen Signatur soll danach eine digitale Signaturkarte eingesetzt werden, auf der sich ein geheimer Signaturschlüssel befindet. Die Vornahme einer Signatur erfolgt an einem geeigneten Terminal, von dem die Karte ein zu signierendes Dokument in elektronischer Form erhält. Um eine Signatur vornehmen zu können, muß der Nutzer der Karte über das Terminal seine Identität nachweisen. Regelmäßig erfolgt dieser Nachweis durch Eingabe einer PIN (Personen-Identifikations-Nummer), welche mit einer in der Karte gespeicherten Referenz-PIN verglichen wird. Zukünftig ist vorgesehen, die Nutzerauthentifizierung durch Prüfung eines biometrischen Merkmales, etwa eines Fingerabdruckes, vorzunehmen. Wurde ein elektronisches Dokument nach erfolgreicher Authentifizierung des Nutzers mit Hilfe einer Signaturkarte signiert, kann es anschließend auf beliebige Weise weitergegeben werden. Mit Hilfe der elektronischen Signatur wird es möglich, besonders sicherheitskritische Transaktionen, etwa die Erteilung von kostenbehafteten Dienstleistungsaufträgen, auf elektronischem Wege durchzuführen.

Durch die beabsichtigte Einführung biometrischer Merkmale zur Benutzerauthentifizierung wird eine weitere Verbesserung der Vertrauenswürdigkeit einer elektronischen Signatur gegenüber der bislang üblichen PIN-Authentifizierung erreicht, weil dadurch sichergestellt ist, daß eine Benutzung der Signaturkarte nur in Anwesenheit einer definierten, dazu berechtigten Person erfolgen kann.

Der hierin verwirklichte Qualitätsunterschied hinsichtlich der Nutzerauthentifizierung findet in der Nutzbarkeit der jeweils erzeugten elektronischen Signatur bislang jedoch keinen Niederschlag.

Aus der US 2002/0016913 A1 ist ein Authentisierungssystem mit einem Sicherheitscontroller, einem Leser und einer für verschieden Authentifizierungsaufgaben einsetzbare IC-Karte bekannt, auf der unterschiedliche Identifikationsparameter hinterlegt sind, z.B. eine PIN oder ein biometrischer Referenzdatensatz, etwa eine Irisabbildung. Für jede Authentifizierungsaufgabe sind bestimmte Identifikationsparameter festgelegt, die zu prüfen sind. Mit dem System kann unter anderem der Zutritt zu Räumen mit unterschiedlichen Sicherheitsstufen kontrolliert werden. Um Zutritt zu einem Raum zu erhalten, authentisiert sich zunächst der Nutzer gegenüber der IC-Karte, indem er ihr bei Räumen mit normaler Sicherheitsstufe die PIN und bei Räumen mit erhöhter Sicherheitsstufe ein biometrisches Merkmal präsentiert. Zur Gewinnung des biometrischen Merkmales ist eine geeignete Erfassungsvorrichtung bereitgestellt. Die IC-Karte vergleicht die PIN und das präsentierte biometrische Merkmal mit den auf der IC-Karte hinterlegten Referenzwerten und erzeugt ein Verifizierungsergebnis, das angibt, wie gut eine präsentierte PIN bzw. ein präsentiertes biometrisches Merkmal jeweils mit dem Referenzwert übereinstimmen. Anschließend authentisiert sich die IC-Karte gegenüber dem Sicherheitscontroller. Hierzu übersendet der Leser der IC-Karte ein Tag, mit dem eine Nutzerinformation angefordert wird. Die IC-Karte ermittelt die Nutzerinformation aus ihrem Speicher, verknüpft sie mit einem Identifikationsmarker, der aus dem Verifizierungsergebnis gebildet wird, bildet eine Signatur über die Verknüpfung und sendet Verknüpfung und Signatur an den Sicherheitscontroller. Der Sicherheitscontroller prüft die Signatur und entscheidet, ob das übermittelte Verifizierungsergebnis als ausreichend für einen Zutritt angesehen wird. Im Gutfall gibt der Sicherheitscontroller den Zutritt frei.

Im Zusammenhang mit der Ausführung von elektronischen Transaktionen wurden die sich aus der unterschiedlichen Qualität von PIN und biometrischer Authentifizierung ergebenden Möglichkeiten noch nicht gezielt genutzt.

Es ist Aufgabe der Erfindung, ein Verfahren zum Ausführen einer gesicherten elektronischen Transaktion unter Verwendung eines tragbaren Datenträgers anzugeben, das der Qualität der durchgeführten Nutzerauthentifizierung Rechnung trägt.

Diese Aufgabe wird gelöst durch ein Verfahren mit den Merkmalen des Hauptanspruchs. Die Aufgabe wird ferner gelöst durch einen tragbaren Datenträger, ein Terminal sowie ein System gemäß den unabhängigen Ansprüchen 8, 10, und 11.

Erfindungsgemäß werden für die Ausführung einer Nutzerauthentifizierung wenigstens zwei verschiedene Authentifizierungsmethoden von unterschiedlicher Qualität angeboten, von denen eine aufgrund eines vom Terminal an den Datenträger übermittelten Datensatzes oder aufgrund einer durch das Terminal ausgegebenen Entscheidungsaufforderung ausgewählt wird. Von dem ausführenden Datenträger wird eine Qualitätsinformation über die eingesetzte Authentifizierungsmethode erstellt. Die Qualitätsinformation wird dem Ergebnis einer von dem tragbaren Datenträger nachfolgend ausgeführten sicherheitsbegründenden Operation beigefügt. Für den Empfänger einer so gebildeten Botschaft ist damit eindeutig erkennbar, auf welche Weise sich ein Nutzer vor Durchführung der sichheitsbegründenden Operation authentifiziert hat. Damit eröffnet sich dem Empfänger die Möglichkeit, die Ausführung einer gesicherten Transaktion von der Qualität der Nutzerauthentifizierung abhängig zu machen. So kann etwa bei einer Geldbörsenanwendung vorgesehen sein, daß die Entnahme eines unterhalb eines Grenzwertes liegenden Geldbetrags von einem Konto nach PIN-Authentifizierung erfolgen kann, die Entnahme von über dem Grenzwert liegenden Geldbeträgen dagegen nur nach Authentifizierung mittels eines biometrischen Merkmals.

Besonders vorteilhaft wird das erfindungsgemäße Verfahren im Rahmen der elektronischen Signatur eingesetzt.

Vorteilhaft werden weiter die bei der Durchführung einer Nutzerauthentifizierung jeweils nicht eingesetzten Authentifizierungsmethoden für die Dauer der Authentifizierung gesperrt.

Unter Bezugnahme auf die Zeichnung wird nachfolgend ein Ausführungsbeispiel der Erfindung näher erläutert.

### Zeichnung

Es zeigen:
- Figur 1: die Struktur eines Systems zur Vornahme einer digitalen Signatur,
- Figuren 2, 3: den Ablauf der Durchführung einer digitalen Signatur als Flußdiagramm.

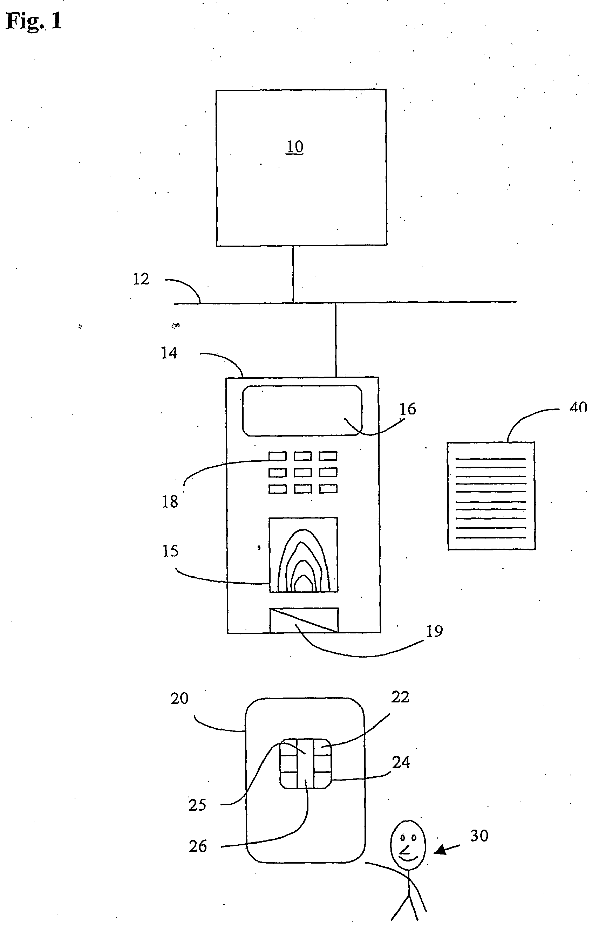

Figur 1 veranschaulicht die Grundstruktur eines Transaktionssystems zur Ausführung einer gesicherten elektronischen Transaktion. Wesentliche Elemente der Struktur im Hinblick auf die Erfindung sind ein Hintergrundsystem 10, das über ein Datennetz 12 mit einem Terminal 14 verbunden ist, ein tragbarer Datenträger 20, der von einem Nutzer 30 mitgeführt wird und zur Ausführung einer sicherheitsbegründenden Operation im Rahmen einer Transaktion eingerichtet ist, sowie ein Datensatz 40, der im Rahmen einer auszuführenden Transaktion sicher gehandhabt werden soll.

Für die gesicherte elektronische Transaktion wird im folgenden von einer Transaktion ausgegangen, welche die Erzeugung einer digitalen Signatur auf Seiten des Nutzers 30 erfordert. Eine solche Transaktion kann etwa die Durchführung eines Bankgeschäftes sein, bei dem das Konto des Nutzers 30 belastet wird. Die beschriebene Lösung ist aber nicht auf Transaktionen beschränkt, die eine digitale Signatur erfordern, sondern gundsätzlich in jeder Anwendung einsetzbar, bei der ein tragbarer Datenträger 20 von einem Terminal 14 zugeführte Datensätze 40 bearbeitet und an das Terminal 14 zurückgibt.

Das Hintergrundsystem 10 steht stellvertretend für eine Einrichtung, welche die eigentliche Transaktion vornimmt, etwa die Bewegung von Geld zwischen zwei Konten oder die Einleitung einer Warenauslieferung aufgrund einer Bestellung. Das Hintergrundsystem 10 kann entsprechend ein komplexes, aus vielen Einzelkomponenten bestehendes System sein oder auch, im Extremfall, gänzlich wegfallen. Ist die Transaktion eine Kontobewegungsanwendung, wird das Hintergrundsystem 10 typischerweise durch eine Bankzentrale gebildet.

Das Datennetz 12 dient zum Austausch von Daten zwischen einem Terminal 14 und dem Hintergrundsystem 10. Es kann jede beliebige physikalische Ausprägungsform besitzen und beispielsweise durch das Internet oder ein Mobilfunknetz realisiert sein.

Das Terminal 14 bildet die nutzerseitige Schnittstelle des Transaktionssystems und verfügt hierzu über Wiedergabemittel 16, typischerweise in Gestalt einer Bildanzeige, sowie Eingabemittel 18, etwa in Gestalt einer Tastatur. Das Terminal 14 kann ein öffentlich zugängliches Terminal, etwa ein in einer Bank aufgestelltes Gerät oder ein im Privatbereich eines Nutzers 30 befindliches Gerät, etwa ein PC oder ein Handy sein. Mit dem Datennetz 12, damit mit einem Hintergrundsystem 10 können ein oder mehrere Terminals 14 verbunden sein, die dabei von unterschiedlicher Bauart sein können. Das Terminal 14 verfügt über eine Schnittstelle 19 zur Kommunikation mit einem tragbaren Datenträger 20. Die Schnittstelle 19 kann von beliebiger physikalischer Ausführung, insbesondere von einem kontaktbehafteten oder von eine berührungslos arbeitenden Typ sein.

Das Terminal 14 besitzt ferner eine, im folgenden als Sensor bezeichnete, Sensoreinrichtung 15 zur Erfassung eines biometrischen Merkmales eines Nutzers 30. Durch den Sensor 15 erfaßbar sein können physiologische Merkmale, wie Gesichtsmerkmale, Merkmale des Auges oder Fingerabdrükke, oder verhaltensbasierte Merkmale wie etwa durch Stimme oder durch Schreibvorgänge ausgedrückte Sprech- oder Schriftsequenzen. In Fig.1 ist ein als Sensor 15 Fingerabdrucksensor angedeutet. Der Sensor 15 kann zur Aufnahme mehrerer verschiedener biometrischer Merkmale ausgebildet sein. Teil des Sensors 15 sind weiter Mittel zur Vorauswertung eines aufgenommenen biometrischen Merkmales. Dabei werden die aufgenommenen Informationen reduziert und auf bestimmte, charakteristische Primärmerkmale zurückgeführt. Die verschiedenen Typen und die Durchführung biometrischer Authentifizierungsverfahren sind beispielsweise in dem eingangs genannten "Handbuch der Chipkarten", Kapitel 8.1.2, beschrieben.

Bei dem tragbaren Datenträger 20 handelt es sich beispielsweise um eine Chipkarte, wie sie in gleichfalls dem "Handbuch der Chipkarten" ausführlich beschrieben ist. Figur 1 deutet für den tragbaren Datenträger 20 insbesondere eine kontaktbehaftete Chipkarte mit einem Kontaktfeld 22 an, welches eine zu der terminalseitigen Schnittstelle 19 korrespondierende Schnittstelle bildet. Über die Schnittstellen 22, 19 erfolgt die Kommunikation zwischen Chipkarte 20 und Terminal 14. Außer der Gestalt einer Chipkarte kann der tragbare Datenträger 20 beliebige andere Gestaltungen aufweisen und beispielsweise in einem vom Nutzer 30 getragenen Bekleidungsstück oder einen vom Nutzer 30 mitgeführten Gebrauchsgegenstand realisiert sein.

Der tragbare Datenträger 20 besitzt einen integrierten Schaltkreis 24, welcher alle Elemente eines üblichen Computers aufweist, insbesondere einen Mikroprozessor 25 sowie Speichermittel 26. Der Mikroprozessor 25 ist zur Ausführung einer sicherheitsbegründenden Operation eingerichtet. Beispielsweise ist er dazu eingerichtet, einen zugeführten Datensatz 40, der im folgenden als elektronisches Dokument 40 bezeichnet wird, einem kryptographischen Algorithmus zu unterwerfen, wobei er wenigstens einen geheimen Schlüssel benutzt, der in den Speichermitteln 26 abgelegt ist. Der Mikroprozessor 25 ist ferner dazu eingerichtet, weitere Funktionalitäten gemäß in den Speichermitteln 26 abgelegten Programmen zu realisieren.

Der tragbare Datenträger 20 ist weiter zur Ausführung wenigstens eines, zweckmäßig jedoch mehrerer verschiedener Nutzerauthentifizierungsmethoden eingerichtet. Vorzugsweise unterstützt er wenigstens zwei im Hinblick auf die Qualität der Authentifizierung verschiedenwertige Authentifizierungmethoden. Zweckmäßig unterstützt er zumindest eine wissensbasierte Authentifizierungmethode, etwa eine PIN-Prüfung, sowie wenigstens eine biometrische Methode, in deren Rahmen ein am Terminal 14 zu präsentierendes biometrisches Merkmal des Nutzers 30 geprüft wird. Die biometrische Methode bildet hierbei die qualitativ höherwertige, da sie die persönliche Anwesenheit des Nutzers (30) voraussetzt; bei der wissenbasierten Methode ist dies nicht gewährleistet, das Wissen kann von einer unberechtigtem Nutzer erlangt worden sein. Entsprechend sind in den Speichermitteln 26 zumindest ein vom Nutzer 30 vorzulegendes Geheimnis, also etwa eine einem Benutzer 30 zugeordnete Referenz-PIN sowie wenigstens ein einem Benutzer 30 zugeordneter biometrischer Referenzdatensatz hinterlegt. Zweckmäßig kann vorgesehen sein, daß der tragbare Datenträger 20 mehr als zwei Authentifizierungsmethoden unterstützt, insbesondere weitere biometrische Methoden. Entsprechend sind in diesem Fall in den Speichermitteln 26 weitere Geheimnisse und/oder Referenzdatensätze hinterlegt und ist der integrierte Schaltkreis 24 dazu eingerichtet, die weiteren Authentifizierungsmethoden durchzuführen.

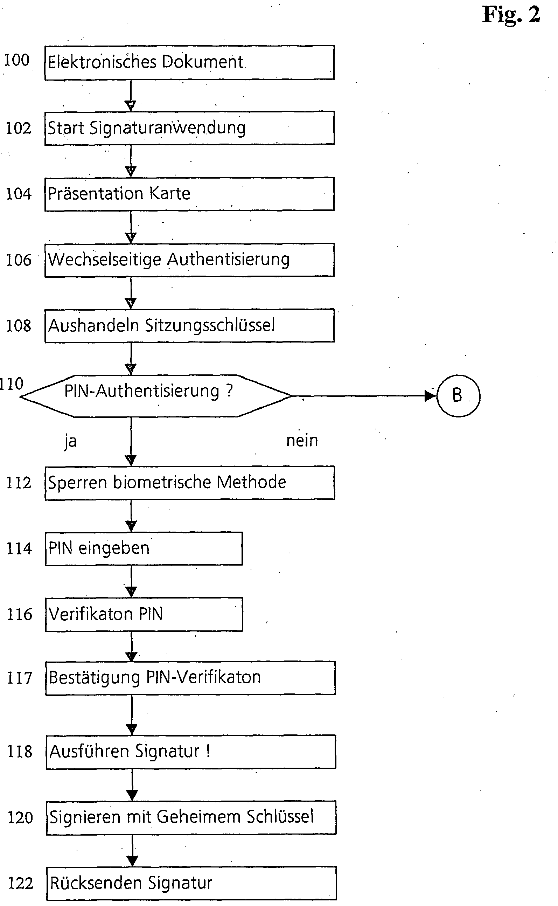

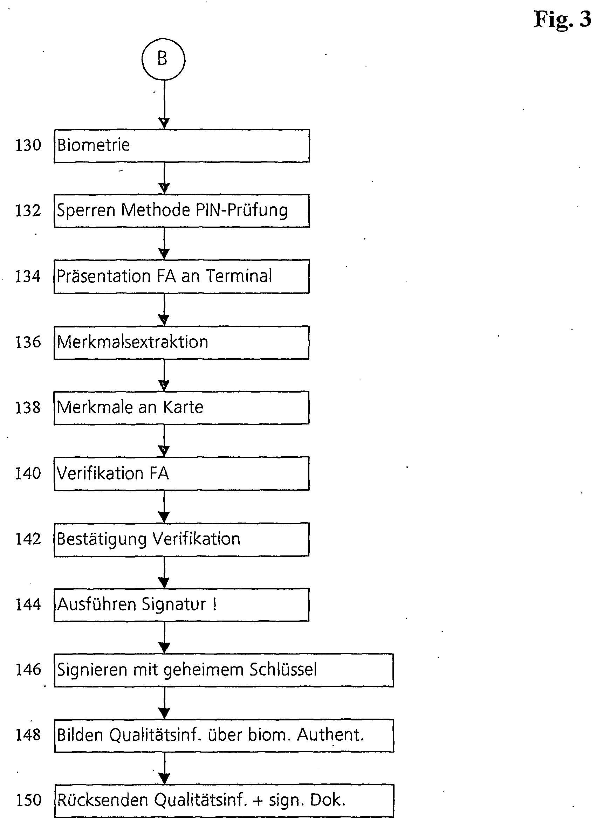

Nachfolgend wird anhand der Figuren 2 und 3 die Ausführung einer gesicherten elektronischen Transaktion unter Verwendung der in Figur 1 gezeigten Struktur beschrieben. Als sicherheitsbegründende Operation soll dabei ein elektronisches Dokument 40 signiert werden.

Eingeleitet wird die Nutzung durch Erstellung eines elektronischen Dokumentes 40 im Hintergrundsystem 10 oder im Terminal 14, Schritt 100. In der Regel geht der Erstellung ein auslösender Dialog zwischen einem Nutzer 30 und dem Hintergrundsystem 10 über das Terminal 14 voran. Spätestens wenn ein elektronisches Dokument 40 im Terminal 14 vorliegt, veranlaßt dieses den Start der Signaturanwendung, Schritt 102. Die Startveranlassung kann dabei automatisch durch das Terminal 14 oder das Hintergrundsystem 10 erfolgen oder wird von dem Nutzer 30 eingeleitet, nachdem das Terminal 14 diesen dazu mittels einer geeigneten Darstellung auf der Anzeigevorrichtung 16 dazu aufgefordert hat.

Nachdem die Signaturanwendung gestartet wurde, präsentiert der Nutzer 30 dem Terminal 40 einen geeigneten tragbaren Datenträger 2o, Schritt 104. Für den tragbaren Datenträger 20 wird im folgenden die Gestalt einer kontaktbehafteten Chipkarte zugrunde gelegt. Weiter wird nachfolgend davon ausgegangen, daß die Chipkarte 20 zwei Authentifizierungsmethoden unterstützt, nämlich eine PIN-Prüfung als wissensbasierte, qualitativ niederwertige Methode, sowie eine Fingerabdruckprüfung als biometrische, qualitativ höherwertige Methode.

Hat das Terminal 14 die Anwesenheit einer Chipkarte 20 erkannt, führt es zunächst eine wechselseitige Authentisierung mit dieser durch, Schritt 106, wobei zunächst die Chipkarte 20 dem Terminal 14 die ihre, anschließend das Terminal 14 der Chipkarte 20 seine Authentizität nachweist.

Verläuft die Authentisierung erfolgreich, handeln Terminal 14 und Chipkarte 20 dynamische Sitzungsschlüssel aus, um die weitere Kommunikation gesichert im sogenannten "Secure Messaging"-Modus führen zu können, Schritt 108. Wegen Einzelheiten zum Konzept des Secure Messagings sowie dynamischen Sitzungsschlüsseln wird wiederum auf das "Handbuch der Chipkarten" verwiesen.

Anschließend erfolgt die Authentifizierung des Nutzers 30 gegenüber der Chipkarte 20. Hierbei prüft das Terminal 14 zunächst, auf welche Weise - wissensbasiert, also durch Eingabe einer PIN oder biometrisch, d.h. durch Präsentation eines Fingerabdruckes - die Authentifizierung erfolgen soll, Schritt 110. Die Festlegung einer Authentifizierungsmethode kann aufgrund von mit dem elektronischen Dokument 40 übermittelten Informationen selbsttätig durch das Terminal 14 erfolgen, sie kann aber auch über die Anzeigevorrichtung 16 dem Nutzer 30 als Entscheidungsaufforderung vorgelegt werden. Im letzteren Fall trifft den Nutzer 30 mittels der Eingabemittel 18 eine Entscheidung.

Soll die Authentifizierung des Nutzers 30 wissensbasiert, d.h. durch Eingabe einer PIN erfolgen, sperrt die Chipkarte 20 die weiteren möglichen Authentifizierungsmethoden, d.h. die Fingerabdruckprüfung, Schritt 112, und fordert den Nutzer 30 über die Anzeigevorrichtung 16 auf, seine PIN über die Eingabemittel 18 einzugeben.

Der Nutzer 30 gibt daraufhin über die Eingabemittel 18 die PIN ein und das Terminal 14 leitet sie direkt oder abgewandelt über die Schnittstelle 19, 22 an die Chipkarte 20 weiter, Schritt 114. Die Übermittlung der PIN bzw. der daraus abgeleiteten Information wie die nachfolgend Kommunikation mit der Chipkarte wird zusätzlich unter Verwendung der ausgehandelten Sitzungsschlüssel gesichert. Zweckmäßig erfolgt die gesamte Kommunikation zwischen Terminal 14 und Chipkarte 20 im Secure Messaging Modus.

Diese prüft die übermittelte PIN und bestätigt im Gutfall dem Terminal 14 die Korrektheit, bzw. bricht das Verfahren ab, wenn die PIN als falsch geprüft wurde, Schritt 116.

Ist der Gutfall gegeben, veranlaßt das Terminal 14 die Chipkarte 20 durch entsprechend Befehle zur Durchführung der sicherheitsbegründenden Operation, d.h. der digitalen Signatur, und übermittelt der Chipkarte 20 das zu signierende elektronische Dokument 40, Schritt 118.

Die Chipkarte 20 signiert das zugeführte elektronische Dokument 40 mit dem in den Speichermitteln 22 gespeicherten geheimen Schlüssel, 120 und sendet die elektronische Signatur 40 zurück an das Terminal 14, Schritt 122, welches damit die eingeleitete elektronische Transaktion weiterführt.

Ergibt die Prüfung im Schritt 110, daß die Authentifizierung des Nutzers 30 nicht wissensbasiert sondern biometrisch erfolgen soll, leitet das Terminal 14 eine Authentifizierung gegen Präsentation eines biometrischen Merkmales ein und macht der Chipkarte 20 eine entsprechende Mitteilung, Schritt 130. Die Chipkarte 20 sperrt daraufhin die nun nicht eingesetzten weiteren Authentifizierungsmethoden, d.h. die wissensbasierten PIN-Prüfung, Schritt 132.

Nachfolgend präsentiert der Nutzer 30 dem Terminal 14 entsprechend der eingesetzten Authentifizierungsmethode ein biometrisches Merkmal, d.h. einen Fingerabdruck, Schritt 134. Die Aufforderung zur Präsentation des Fingerabdrucks erfolgt vorzugsweise durch eine entsprechende Darstellung auf der Anzeigevorrichtung 16 des Terminals 14. Der Fingerabdruck wird durch den am Terminal 14 vorgesehenen Sensor 15 erfaßt.

Das erfaßte biometrische Merkmal, d.h. den Fingerabdruck des Nutzers 30 unterwirft das Terminal 14 einer Vorverarbeitung, in der es aus dem am Sensor 15 gewonnenen Signal bestimmte kennzeichnende Merkmale extrahiert, Schritt 136. Bei Verwendung eines Fingerabdrucks werden beispielsweise Primärmerkmale des "Klassifikationsverfahrens nach Henry" ermittelt, wie es in dem "Handbuch der Chipkarten" beschrieben ist.

Die extrahierten Merkmale übermittelt das Terminal 14 über die Schnittstelle 19, 22 an den tragbaren Datenträger 20, Schritt 138.

Nach Eingang dort führt dieser eine Verifikation der übermittelten extrahierten Merkmale durch, Schritt 140. Hierbei vergleicht der integrierte Schaltkreis 24 die erhaltenen extrahierten Merkmale mit den in den Speichermitteln gespeicherten Referenzmerkmalen und prüft, ob eine hinreichende Übereinstimmung vorliegt. Ist das der Fall, bestätigt der tragbare Datenträger 20 dem Terminal 14 die erfolgreiche Verifikation des übermittelnden biometrischen Merkmales, Schritt 142. Weiter schaltet sich der tragbare Datenträger 20 zur Ausführung der beabsichtigte sicherheitsbegründenden Operation, d.h. zur Vornahme einer digitalen Signatur, bereit.

Nach Erhalt der Bestätigung über eine erfolgreiche Verifikation der Authentifizierung veranlaßt das Terminal 14 den Datenträger 20 durch entsprechende Befehle, die digitale Signatur auszuführen, Schritt 144. Zusammen mit den Befehlen übermittelt das Terminal 14 dem tragbaren Datenträger 20 dabei das zu signierende elektronische Dokument 40 oder zumindest Teile davon.

Der integrierte Schaltkreis 24 des tragbaren Datenträgers 20 führt daraufhin die zur Erstellung einer digitalen Signatur erforderlichen Operationen durch, Schritt 146. Typischerweise bildet er hierbei einen Hashwert über den erhaltenen Teil des elektronischen Dokuments 40 und verschlüsselt diesen mit einem in den Speichermitteln 26 gespeicherten, geheimen Schlüssel eines asymmetrischen, aus einem geheimen und eine öffentlichen Schlüssel bestehenden Schlüsselpaares.

Desweiteren bildet der integrierte Schaltkreis 24 eine Qualitätsinformation, Schritt 148, die quittiert, daß die Authentifizierung des Nutzers 30 unter Verwendung eines biometrischen Merkmales erfolgte. Diese Qualitätsinformation wird sodann fest mit der erstellten digitalen Signatur zu einer Sicherheitsbotschaft verknüpft, zweckmäßig im Rahmen des "Secure Messaging" Mechanismus unter Verwendung der zuvor ausgehandelten Sitzungsschlüssel.

Die so gebildete, aus digitaler Signatur und Qualitätsinformation bestehende Sicherheitsbotschaft sendet der tragbare Datenträger 20 zurück an das Terminal 14, Schritt 150. Von hier wird die übermittelte Sicherheitsbotschaft im Rahmen der ausgeführten gesicherten elektronischen Transaktion an den an der Transaktion beteiligten Empfänger, etwa ein Hintergrundsystem 10, weitergeleitet.

Zusätzlich zu der durch den tragbaren Datenträger 20 vorgenommenen sicherheitsbegründenden Operation erhält der Empfänger der Sicherheitsbotschaft dabei durch die darin enthaltene. Qualitätsinformation eine Angabe über die Qualität der vorgenommenen Authentifizierung des Nutzers 30.

Im vorbeschriebenen Beispiel wurde eine Qualitätsinformation nur bei Verwendung einer biometrischen Authentifizierungsmethode erstellt, nicht bei Verwendung einer wissensbasierten Methode. Damit signalisiert bereits das Fehlen einer Qualitätsinformation die Verwendung einer qualtitativ niederwertigeren Methode. Selbstverständlich kann aber vorgesehen sein, daß die Bildung einer Qualitätsinformation grundsätzlich erfolgt, d.h. unabhängig davon, ob zur Authentifizierung eine wissensbasierte oder eine biometrische Methode gewählt wurde.

Unter Beibehaltung des grundlegenden Gedankens, dem Ergebnis einer von einem tragbaren Datenträger ausgeführten sicherheitsbegründenden Operation eine Qualitätsinformation über die Qualität der zuvor durchgeführten Nutzerauthentifizierung beizufügen, gestattet das vorbeschriebene Konzept weitere Ausgestaltungen und Abwandlungen. Dies gilt für die Gestaltung des bei der Ausführung einer Transaktion eingesetzten Systems, das mehr und Komponenten anderen Typs umfassen kann. Der beschriebene Verfahrensablauf kann ferner weitere Schritte, etwa Zwischenschritte umfassen.

## Patentansprüche

1. Verfahren zum Ausführen einer gesicherten elektronischen Transaktion an einem Terminal unter Verwendung eines tragbaren Datenträgers, wobei ein Nutzer sich gegenüber dem tragbaren Datenträger authentifiziert, wobei für die Authentifizierung des Nutzers wenigstens zwei verschiedene Authentifizierungsmethoden von unterschiedlicher Qualität angeboten werden, der tragbare Datenträger dem Terminal den Nachweis der Authentifizierung bestätigt und der tragbare Datenträger anschließend im Rahmen der elektronischen Transaktion eine sicherheitsbegründende Operation ausführt, **dadurch gekennzeichnet, daß** durch die sicherheitsbegründende Operation ein Datensatz (40) bearbeitet wird, den das Terminal (14) dem tragbaren Datenträger übermittelt, aufgrund einer in dem Datensatz (40) enthaltenen Information oder aufgrund einer durch das Terminal (14) ausgegebenen Entscheidungsaufforderung durch den Nutzer (30) eine Authentifizierungsmethode festgelegt wird, durch den tragbaren Datenträger (20) eine Qualitätsinformation darüber erstellt wird, durch welche Authentifizierungsmethode die Authentifizierung des Nutzers (30) erfolgte und diese Qualitätsinformation dem Ergebnis der sicherheitsbegründenden Operation beigefügt wird.

2. Verfahren nach Anspruch 1, **dadurch gekennzeichnet, daß** die durch den tragbaren Datenträger (20) ausgeführte sicherheitsbegründende Operation in der Erstellung einer digitalen Signatur besteht.

3. Verfahren nach Anspruch 1, **dadurch gekennzeichnet, daß** die Authentifizierung des Nutzers (30) durch Präsentation eines biometrischen Merkmales vorgenommen wird.

4. Verfahren nach Anspruch 3, **dadurch gekennzeichnet, daß** die Authentifizierung des Nutzers (30) durch Präsentation eines für einen Nutzer (30) charakteristischen physiologischen oder verhaltensbasierten Merkmales vorgenommen wird.

5. Verfahren nach Anspruch 1, **dadurch gekennzeichnet, daß** die Authentifizierung des Nutzers (30) durch Nachweis der Kenntnis eines Geheimnisses vorgenommen wird.

6. Verfahren nach Anspruch 5, **dadurch gekennzeichnet, daß** die jeweils nicht eingesetzten Authentifizierungsmethoden gesperrt werden.

7. Verfahren nach Anspruch 5, **dadurch gekennzeichnet, daß** für eine Authentifizierungsmethode keine Qualitätsinformation erzeugt wird.

8. Tragbarer Datenträger zur Ausführung einer sicherheitsbegründenden Operation im Rahmen einer gesicherten elektronischen Transaktion, wobei ein Nutzer sich gegenüber dem tragbaren Datenträger authentifiziert und der tragbare Datenträger einem Terminal die Authentifizierung bestätigt, wobei der tragbare Datenträger wenigstens zwei qualitativ verschiedene Authentifizierungsmethoden unterstützt, **dadurch gekennzeichnet, daß** der tragbare Datenträger (20) in der sicherheitsbegründenden Operation einen Datensatz (40) bearbeitet, der ihm von dem Terminal (14) übermittelt wird, wobei aufgrund einer in dem Datensatz (40) enthaltenen Information oder aufgrund einer durch das Terminal (14) ausgegebenen Entscheidungsaufforderung durch den Nutzer (30) eine Authentifizierungsmethode festgelegt wird, und daß der tragbare Datenträger (20) dazu eingerichtet ist, eine Qualitätsinformation zu erstellen, welche angibt, durch welche Authentifizierungsmethode die Authentifizierung des Nutzers (30) durchgeführt wurde.

9. Datenträger nach Anspruch 8, **dadurch gekennzeichnet daß** der tragbare Datenträger (20) zur Erstellung einer digitalen Signatur eingerichtet ist.

10. Terminal zur Verwendung in Verbindung mit einem tragbaren Datenträger nach Anspruch 8, **dadurch gekennzeichnet, daß** es Mittel (16,18) aufweist, um einen Nutzer (30) zur Auswahl einer von wenigstens zwei möglichen Authentifizierungsmethoden zu veranlassen

11. System zur Ausführung einer gesicherten elektronischen Transaktion, in deren Rahmen die Qualität der Authentifizierung eines Nutzers gegenüber dem System festgestellt wird, umfassend einen tragbaren Datenträger (20) nach Anspruch 8 sowie ein Terminal nach Anspruch 10.

## Claims

1. A method for executing a secure electronic transaction on a terminal while employing a portable data carrier, wherein a user authenticates himself or herself vis-à-vis the portable data carrier, wherein for the authentication of the user at least two different authentication methods of different quality are offered, the portable data carrier confirms the proof of authentication to the terminal, and the portable data carrier then performs a security-establishing operation in the context of the electronic transaction, **characterized in that** by the security-establishing operation (40), a data set is edited which the terminal (14) transmits to the portable data carrier, an authentication method is specified on the basis of an information item contained in the data set (40) or on the basis of a decision request issued by the user (30) through the terminal (14), a quality information item is created by the portable data carrier (20) regarding by which authentication method the authentication of the user (30) was carried out and this quality information item is attached to the result of the security-establishing operation.

2. The method according to claim 1, **characterized in that** the security-establishing operation performed by the portable data carrier (20) consists in creating a digital signature.

3. The method according to claim 1, **characterized in that** the authentication of the user (30) is performed by presentation of a biometric feature.

4. The method according to claim 3, **characterized in that** the authentication of the user (30) is performed by presentation of a physiological or behavior-based feature characteristic of a user (30).

5. The method according to claim 1, **characterized in that** the authentication of the user (30) is performed by proof of knowledge of a secret.

6. The method according to claim 5, **characterized in that** the particular authentication methods not used are disabled.

7. The method according to claim 5, **characterized in that** no quality information is produced for an authentication method.

8. A portable data carrier for executing a security-establishing operation in the context of a secure electronic transaction, wherein a user authenticates himself or herself vis-à-vis the portable data carrier and the portable data carrier confirms the authentication to the terminal, wherein the portable data carrier supports at least two authentication methods, **characterized in that** the portable data carrier (20) in the security-establishing operation edits a data set (40), which is transmitted to it by the terminal (14), wherein an authentication method is set on the basis of an information item contained in the data set (40) or on the basis of a decision request by the user (30) issued through the terminal (14), and the portable data carrier (20) is configured to create a quality information item which states by which authentication method the authentication of the user (30) was carried out.

9. A data carrier according to claim 8, **characterized in that** the portable data carrier (20) is set up to create a digital signature.

10. A terminal for use in connection with a portable data carrier according to claim 8, **characterized in that** it has means (16, 18) for causing a user (30) to select one of at least two possible authentication methods.

11. A system for executing a secure electronic transaction within which the quality of authentication of a user vis-à-vis the system is ascertained, comprising a portable data carrier (20) according to claim 8 as well as a terminal according to claim 10.

## Revendications

1. Procédé d'exécution d'une transaction électronique sécurisée à un terminal en se servant d'un support de données portable, cependant qu'un utilisateur s'authentifie vis-à-vis du support de données portable, cependant que, pour l'authentification de l'utilisateur, au moins deux méthodes différentes d'authentification de qualité différente sont proposées, que le support de données portable confirme au terminal la justification de l'authentification et que le support de données portable exécute ensuite, dans le cadre de la transaction électronique, une opération fondatrice de sécurité, **caractérisé en ce que**, par l'opération fondatrice de sécurité, un jeu de données (40) est traité, lequel est, par le terminal (14), transféré au support de données portable, **en ce que**, en vertu d'une information contenue dans le jeu de données (40) ou en vertu d'une demande de décision émise par le terminal (14), par l'utilisateur (30), une méthode d'authentification est fixée, **en ce que**, par le support de données (20) portable, une information sur la qualité est établie par le biais de la méthode d'authentification ayant servi à l'authentification de l'utilisateur (30), et que cette information sur la qualité est adjointe au résultat de l'opération fondatrice de sécurité.

2. Procédé selon la revendication 1, **caractérisé en ce que** l'opération fondatrice de sécurité exécutée par le support de données portable(20) consiste en la création d'une signature électronique.

3. Procédé selon la revendication 1, **caractérisé en ce que** l'authentification de l'utilisateur (30) est effectuée par présentation d'une caractéristique biométrique.

4. Procédé selon la revendication 3, **caractérisé en ce que** l'authentification de l'utilisateur (30) est effectuée par présentation d'une caractéristique, physiologique ou basée sur le comportement,caractéristique d'un utilisateur (30).

5. Procédé selon la revendication 1, **caractérisé en ce que** l'authentification de l'utilisateur (30) est effectuée par justification de la connaissance d'un secret.

6. Procédé selon la revendication 5, **caractérisé en ce que** les méthodes d'authentification respectivement non utilisées sont bloquées.

7. Procédé selon la revendication 5, **caractérisé en ce que**, pour une méthode d'authentification, aucune information sur la qualité n'est générée.

8. Support de données portable destiné à l'exécution d'une opération fondatrice de sécurité dans le cadre d'une transaction électronique sécurisée, cependant qu'un utilisateur s'authentifie vis-à-vis du support de données portable et que le support de données portable confirme à un terminal l'authentification, cependant que le support de données portable assiste au moins deux méthodes d'authentification qualitativement différentes,**caractérisé en ce que** le support de données portable (20), lors de l'opération fondatrice de sécurité, traite un jeu de données (40) qui lui est transféré par le terminal (14),cependant que,en vertu d'une information contenue dans le jeu de données (40) ou en vertu d'une demande de décision émise par le terminal (14), par l'utilisateur (30), une méthode d'authentification est fixée, et **en ce que** le support de données (20) portable est conçu pour produire une information sur la qualité, laquelle indique par quelle méthode d'authentification l'authentification de l'utilisateur (30) a été effectuée.

9. Procédé selon la revendication 8, **caractérisé en ce que** le support de données portable (20) est conçu pour la création d'une signature électronique.

10. Terminal destiné à être utilisé en relation avec un support de données portable (20) selon la revendication 8, **caractérisé en ce qu'**il comporte des moyens (16, 18) pour amener un utilisateur (30) à choisir une d'au moins deux méthodes d'authentification possibles.

11. Système d'exécution d'une transaction électronique sécurisée dans le cadre de laquelle la qualité de l'authentification d'un utilisateur vis-à-vis du système est constatée, comprenant un support de données portable (20) selon la revendication 8 ainsi qu'un terminal selon la revendication 10.
